# EUROPÄISCHE PATENTSCHRIFT

(11) **EP 4 547 437 B1**
(45) Veröffentlichungstag und Bekanntmachung des Hinweises auf die Patenterteilung: **12.11.2025**
(21) Anmeldenummer: 24701148.9
(22) Anmeldetag: 16.01.2024
(51) Int. Cl.: B23K 9/173, B23K 9/32

(54) **VERFAHREN UND VORRICHTUNG ZUM SCHWEISSEN VON WERKSTÜCKEN IN EINER SCHUTZGASKAMMER**
METHOD AND DEVICE FOR WELDING WORKPIECES IN A PROTECTIVE GAS CHAMBER
PROCÉDÉ ET DISPOSITIF POUR SOUDER DES PIÈCES DANS UNE CHAMBRE À GAZ DE PROTECTION

(30) Priorität: 17.01.2023 EP 23151923
(43) Veröffentlichungstag der Anmeldung: 07.05.2025
(73) Patentinhaber: FRONIUS INTERNATIONAL GmbH, 4643 Pettenbach (AT)
(72) Erfinder: ENNSBRUNNER, Helmut, 4643 Pettenbach (AT)
(74) Vertreter: SONN Patentanwälte GmbH & Co KG
(86) Internationale Anmeldenummer: PCT/EP2024/050877
(87) Internationale Veröffentlichungsnummer: WO 2024/153623

(56) Entgegenhaltungen:
- FR-A1- 2 337 606
- FR-A1- 3 066 938
- US-A- 4 845 331
- US-B1- 6 380 515
- US-B2- 7 544 914

## Beschreibung

Die Erfindung betrifft ein Verfahren zum Schweißen von Werkstücken in einer Schutzgaskammer, wobei die Schutzgaskammer vor Beginn des Schweißprozesses über entsprechende Leitungen mit Schutzgas gefüllt wird, und das Werkstück mit einem Schweißbrenner mit einem Gaskanal zur Zuführung eines Schutzgases und einem zur Schweißstelle zuführbaren abschmelzbaren Schweißdraht geschweißt wird.

Die Erfindung betrifft weiters eine Vorrichtung zum Schweißen von Werkstücken in einer Schutzgaskammer, mit einer Schutzgaskammer mit Leitungen zum Einströmen eines Schutzgases, einem Schweißbrenner zur Durchführung eines Schweißprozesses unter Zuführung eines abschmelzbaren Schweißdrahts, wobei der Schweißbrenner einen Gaskanal zur Zuführung eines Schutzgases aufweist.

Die Erfindung ist allgemein auf das Schweißen von Werkstücken in einer Schutzgaskammer gerichtet, insbesondere auf das Auftragsschweißen und die additive Fertigung eines Formkörpers aus Metall, welche beispielsweise unter den Begriffen Wire Arc Additive Manufacturing (WAAM) und Arc-Direct Energy Deposition (Arc-DED) bekannt sind. Bei der additiven Fertigung von Formkörpern aus Nichteisenmetallen, welche eine Affinität zu Sauerstoff haben, ist es besonders wichtig, die Werkstücke vor Sauerstoff zu schützen, um eine Oxidation zu vermeiden. Im Besonderen Titan und Nickel sowie deren Legierungen oxidieren sehr stark, weshalb der Schweißprozess unter einer Schutzgasatmosphäre stattfinden muss, bis das Material eine kritische Temperatur unterschritten hat, oberhalb welcher es zu einer schädlichen Oxidation kommt. Als Schutzgas für die Schutzgaskammer kommt beispielsweise Argon zur Anwendung, das auch häufig als Schutzgas zum Schutz des Lichtbogens während des Schweißprozesses verwendet wird. Das Schweißen in Schutzgaskammern ist sehr aufwändig und durch das hohe Kammervolumen in Kombination mit der Anforderung einer geringen Sauerstoffkonzentration, mit einem sehr hohen Verbrauch an Schutzgas verbunden. Um einerseits die Sauerstoffkonzentration in der Schutzgaskammer trotz vorhandener Undichtheiten niedrig zu halten und andererseits die Verschmutzung durch den Schweißprozess (Schmauch) aus der Schutzgaskammer abzuführen, muss permanent sauberes Schutzgas in hohem Maße zugeführt werden. Darüber hinaus ist das Schweißen größerer Werkstücke, wie zum Beispiel von Flugzeug-Komponenten aus Titan, in Schutzgaskammern mit einem besonders großen Aufwand verbunden, weil für die Inertialbefüllung sehr viel Schutzgas benötigt wird, das nach Abschluss des Schweißprozesses nicht weiter genutzt werden kann.

Die beim Schweißen in einer Schutzgaskammer anfallenden metallischen Stäube (sogenannter Schmauch) lagern sich an Oberflächen, wie beispielsweise an der Innenseite der Schutzgaskammer und am Werkstück ab. Während des Schweißprozesses sammelt sich der Schmauch in der Schutzgaskammer stetig an und führt zu einer Verschmutzung der Schutzgaskammer und des Werkstücks bzw. des Gefüges in den Schweißnähten. Des Weiteren stellen diese metallischen Stäube eine besondere Gefahr dar, weil diese nicht oxidiert sind und zum Abbrand bzw. zu Explosionen neigen können. Wird das Schutzgas abgesaugt, gefiltert und vorzugsweise wieder in die Schutzgaskammer rückgeführt, lagert sich der nicht oxidierte Staub in den Filtern ab und stellt eine große Brand- oder Explosionsgefahr dar.

Beispielsweise beschreibt die DE 10 2015 108 131 A1 ein Verfahren und eine Vorrichtung zum Herstellen von insbesondere metallischen Formkörpern mittels eines additiven Fertigungsverfahrens, wobei das metallische Ausgangsmaterial mit Hilfe eines Lichtbogens innerhalb einer Schutzgaskammer aufgeschmolzen und schichtweise aufgetragen wird.

Die US 6 380 515 B1 beschreibt einen Schweißbrenner, der zusätzlich zum Gaskanal zur Zuführung eines Schutzgases zur Schweißstelle über einen Absaugkanal verfügt, über welchen die Rauchgase von der Schweißstelle abgesaugt werden. Der Aufbau des Schweißbrenners ist allerdings relativ aufwändig.

Die US 4 845 331 A beschreibt ein Verfahren und eine Vorrichtung zum Schweißen von Werkstücken in einer Schutzgaskammer gemäß der Präambel der unabhängigen Ansprüche 1 und 10.

Die Aufgabe der vorliegenden Erfindung besteht in der Schaffung eines oben genannten Verfahrens und einer oben genannten Vorrichtung zum Schweißen von Werkstücken in einer Schutzgaskammer, bei welchen die während des Schweißprozesses in der Schutzgaskammer akkumulierten und an Oberflächen abgelagerten metallischen Stäube (Schmauch) vermieden bzw. reduziert werden sollen, sodass eine möglichst hohe Qualität des hergestellten Werkstücks resultiert und im Inneren der Schutzgaskammer keine Brand- oder Explosionsgefahr durch nicht oxidierte Stäube gegeben ist. Der Verbrauch an Schutzgas soll minimiert werden, sodass die damit verbundenen Kosten reduziert werden können. Das Verfahren und die Vorrichtung sollen möglichst einfach und kostengünstig realisiert bzw. aufgebaut sein. Nachteile bekannter Verfahren und bekannter Vorrichtungen sollen vermieden oder zumindest reduziert werden.

Gelöst wird die erfindungsgemäße Aufgabe in verfahrensmäßiger Hinsicht dadurch, dass zumindest während des Schweißprozesses die Strömungsrichtung im Gaskanal für das Schutzgas im Schweißbrenner zumindest zeitweise umgekehrt wird, sodass Schutzgaskammeratmosphäre von der Schweißstelle abgesaugt wird. Beim erfindungsgemäßen Verfahren wird die Funktion eines herkömmlichen Schweißbrenners, bei dem normalerweise das Schutzgas durch das Schlauchpaket und den Gaskanal in Richtung Werkstück gefördert wird, zumindest zeitweise umgekehrt und durch den Gaskanal des Schweißbrenners Schutzgaskammeratmosphäre von der Schweißstelle abgesaugt. Es wird also zumindest während des Schweißprozesses zumindest zeitweise die Strömungsrichtung des Schutzgases bzw. der Schutzgaskammeratmosphäre im Gaskanal des Schweißbrenners umgekehrt, also aktiv Schutzgaskammeratmosphäre von der Schweißstelle aus der Schutzgaskammer abgesaugt und entlang des Gaskanals und weiter entlang des Schlauchpakets aus dem Schweißsystem gefördert. Unter der abgesaugten Schutzgaskammeratmosphäre versteht man das Gas im Bereich der Schweißstelle, welches Schutzgas zusammen mit dem entstandenen Schmauch enthält. Über den Schweißbrenner wird der Schmauch direkt am Ort des Entstehens abgesaugt und es erfolgt praktisch keine Verunreinigung des Innenraums der Schutzgaskammer mehr. Durch die gezielte zumindest zeitweise Absaugung von der Schweißstelle muss auch nur eine geringe Menge an Schutzgaskammeratmosphäre abgesaugt werden, wodurch der Schutzgasverbrauch reduziert werden kann und folglich die Kosten der Fertigung reduziert werden können. Am Auslass des Schweißsystems wird die abgesaugte Schutzgaskammeratmosphäre mit der Umgebungsluft vermischt, sodass die allenfalls enthaltenen noch nicht oxidierten metallischen Partikel und bzw. oder Verbindungen kontrolliert oxidiert werden und somit keine explosiven Stäube entstehen. Da der Schweißprozess innerhalb einer Schweißkammer stattfindet, welche ohnedies über eine Schutzgasversorgung mit Schutzgas gefüllt wird, kann die Strömungsrichtung im Gaskanal des Schweißbrenners einfach zumindest zeitweise umgekehrt werden und auf die Zufuhr eines Schutzgases über den Gaskanal des Schweißbrenners zur Schweißstelle zumindest zeitweise verzichtet werden. Das Verfahren zeichnet sich durch besondere Einfachheit aus, da herkömmliche oder geringfügig adaptierte Schweißbrenner verwendet werden können und lediglich eine Einrichtung zur zumindest zeitweisen Umkehrung der Richtung der Gasströmung im Gaskanal des Schweißbrenners vorgesehen werden muss. Darüber hinaus kann Schutzgas eingespart und können somit Kosten reduziert und kann die Umwelt geschützt werden.

Unter den Begriff "während des Schweißprozesses" fallen selbstverständlich auch die Phasen vor dem Schweißprozess bzw. vor dem Zünden des Lichtbogens sowie die Phasen nach dem Schweißprozess und auch allfällige Pausen zwischen einzelnen Schweißprozessphasen. Mit der Aussage, dass die Strömungsrichtung zumindest während des Schweißprozesses zumindest zeitweise umgekehrt wird, soll zum Ausdruck gebracht werden, dass auch während Zeitspannen vor und nach dem Schweißprozess Schutzgaskammeratmosphäre von der Schweißstelle abgesaugt werden kann oder sogar permanent abgesaugt wird.

Durch den Zusatz, wonach die Strömungsrichtung "zumindest zeitweise" umgekehrt wird, soll zum Ausdruck gebracht werden, dass während einzelner Phasen des Schweißprozesses auch keine Absaugung der Schutzgaskammeratmosphäre stattfinden kann. Insbesondere während der Lichtbogenphasen kann die Umkehrung der Strömungsrichtung und das Absaugen der Schutzgaskammeratmosphäre nachteilig sein, da durch Verwirbelungen Luft an den Lichtbogen gelangen könnte.

Wenn vor Beginn des Schweißprozesses bevor die Schutzgaskammer mit Schutzgas gefüllt wird, die Schutzgaskammer über den Schweißbrenner durch Absaugen von Schutzgaskammeratmosphäre über den Gaskanal evakuiert wird, kann ein Unterdruck in der Schutzgaskammer geschaffen und die darauffolgende Einbringung des Schutzgases erleichtert werden, da in weiterer Folge weniger Sauerstoffmenge mit dem Schutzgas aus der Schutzgaskammer befördert werden muss. In der Regel wird es sich bei der abgesaugten Schutzgaskammeratmosphäre um Luft oder ein Gasgemisch handeln, sofern noch Reste von Schutzgas in der Schutzgaskammer enthalten waren.

Die Schutzgaskammeratmosphäre wird während des Schweißprozesses über den Gaskanal des Schweißbrenners vorzugsweise mit einem Volumenstrom von 5 bis 100 l/min, vorzugsweise 15 l/min, abgesaugt. Derartige Volumenströme haben sich als geeignet herausgestellt. Um solche Volumenströme realisieren zu können, muss der Gaskanal im Schweißbrenner und im nachfolgenden Schlauchpaket einen geeigneten Querschnitt aufweisen, beispielsweise 3 mm² bis 150 mm². Der tatsächlich verwendete Querschnitt ist in der Regel vom Betriebsdruck der Schweißkammer abhängig.

Die Schutzgaskammeratmosphäre wird vor dem Schweißprozess (hier ist die Schutzgaskammeratmosphäre meist Luft) über den Gaskanal des Schweißbrenners vorzugsweise mit einem Volumenstrom von 5 bis 5000 l/min aus der Schutzgaskammer abgesaugt. Um die Schutzgaskammer möglichst schnell auf den Schweißprozess vorzubereiten ist es anzustreben, die Schutzgaskammeratmosphäre möglichst rasch abzusaugen. Wenn es über den Schweißbrenner nicht so rasch möglich ist, kann die Schutzgaskammeratmosphäre natürlich auch über andere Leitungen aus der Schutzgaskammer abgesaugt werden.

Gemäß einem weiteren Merkmal der Erfindung wird die während des Schweißprozesses über den Gaskanal des Schweißbrenners abgesaugte Schutzgaskammeratmosphäre gefiltert. Dadurch können metallische Stäube abgeschieden und gezielt entsorgt werden. Zum Filtern der metallischen Stäube können aus der Schweißrauchabsaugung bekannte Filterlösungen verwendet werden.

Von Vorteil ist es auch, wenn die während des Schweißprozesses über den Gaskanal des Schweißbrenners abgesaugte Schutzgaskammeratmosphäre gekühlt wird. Dadurch, dass an der Schweißstelle aufgrund des Lichtbogens sehr hohe Temperaturen auftreten, können der Schweißbrenner und die nachfolgenden Komponenten, wie Schlauchpaket, allfällige Filter etc. durch die Kühlung geschützt werden. Durch die Kühlung, welche sowohl durch eine Luftkühlung als auch eine Flüssigkeitskühlung realisiert werden kann und vorzugsweise im Schweißbrenner bzw. im Brennerkörper erfolgt, wird gewährleistet, dass die abgesaugte Schutzgaskammeratmosphäre unter die kritischen Temperaturen, welche Komponenten des Schweißsystems zerstören könnten, sinkt. Beispielsweise könnte die mechanische Festigkeit von Kunststoffschläuchen im Schlauchpaket durch unzulässig hohe Temperaturen der abgesaugten Schutzgaskammeratmosphäre verloren gehen.

Wenn der während des Schweißprozesses über den Gaskanal des Schweißbrenners abgesaugten Schutzgaskammeratmosphäre Sauerstoff zugeführt wird, kann eine Oxidation von allenfalls in der abgesaugten Schutzgaskammeratmosphäre enthaltenen brennbaren oder explosiven metallischen Stäuben bewirkt werden. Durch die kontrollierte Oxidation kann somit die allenfalls ausgehende Brand- oder Explosionsgefahr reduziert werden. Die Zuführung von Sauerstoff wird in der Regel durch eine Zuführung bzw. Beimengung von Umgebungsluft, in welcher Sauerstoff enthalten ist, erfolgen. Wenn die abgesaugte Schutzgaskammeratmosphäre gefiltert wird, erfolgt die Zuführung des Sauerstoffs vorzugsweise vor dem Filter, um die metallischen Partikel schon vor dem Filter zu oxidieren.

Dabei ist es von Vorteil, wenn die während des Schweißprozesses über den Gaskanal des Schweißbrenners abgesaugte Schutzgaskammeratmosphäre und der zugeführte Sauerstoff bzw. die Umgebungsluft vermischt bzw. verwirbelt wird, um eine optimale Oxidation der Stäube zu bewirken.

Wenn die Sauerstoffkonzentration in der Schutzgaskammer gemessen wird, kann der Schweißprozess bzw. die Schutzgaszuführung in **Ab**hängigkeit der gemessenen Sauerstoffkonzentration in der Schutzgaskammer gesteuert oder geregelt werden. Der Sauerstoffgehalt bzw. der Restsauerstoff in der Schutzgaskammer kann auch durch mehrere geeignet angeordnete Sensoren ermittelt werden.

Auch der Schmauchgehalt bzw. die Rauchkonzentration in der Schutzgaskammer kann mit entsprechenden Sensoren, beispielsweise Partikelsensoren, gemessen werden und der Schweißprozess in **Ab**hängigkeit der gemessenen Rauchkonzentration in der Schutzgaskammer gesteuert oder geregelt werden.

Weiters kann der Differenzdruck zwischen der Schutzgaskammer und der Umgebung gemessen werden, um einen Über- oder Unterdruck in der Schutzgaskammer verlässlich feststellen zu können und den Schweißprozess in Abhängigkeit des Differenzdrucks steuern oder regeln zu können. Während des aktiven Lichtbogens ist ein geringer Überdruck von mindestens einigen mbar in der Schutzgaskammer anzustreben.

Vorteilhafterweise wird der Schweißprozess erst begonnen, sobald die Sauerstoffkonzentration in der Schutzgaskammer kleiner 100 ppm und bzw. oder der Differenzdruck größer 3 mbar beträgt. Wenn die Schutzgaskammer mit einem gewissen Überdruck betrieben wird, kann sichergestellt werden, dass während des Schweißprozesses keine Umgebungsluft und somit kein Sauerstoff in die Schutzgaskammer gelangt und dort zu Oxidation der Schweißstelle führen könnte. Um die Belastung auf die Schutzgaskammer und Dichtungen der Schutzgaskammer möglichst gering zu halten, soll der Überdruck aber nicht zu hoch sein und deutlich unter 3 mbar liegen.

Wenn die Menge oder der Massenstrom des in die Schutzgaskammer über die Leitungen zugeführten Schutzgases in Abhängigkeit der gemessenen Sauerstoffkonzentration und bzw. oder des gemessenen Schmauchgehalts und bzw. oder des gemessenen Differenzdrucks geregelt wird, kann der Verbrauch des Schutzgases an die tatsächlichen Gegebenheiten angepasst werden und es können Kosten für die relativ teuren Schutzgase gespart werden.

Das Schutzgas wird der Schutzgaskammer vorzugsweise über mehrere Leitungen und mehrere Einlässe zugeführt, sodass eine sehr rasche Befüllung der Schutzgaskammer mit Schutzgas erzielt werden kann. Auch kann über mehrere Gaseinlässe ein gleichmäßiger Gasstrom in Richtung Schweißbrenner erzielt werden. Die Einströmgeschwindigkeiten können sehr gering sein, um Wirbel zu verhindern oder zu reduzieren und die Dichtungen der Schutzgaskammer nicht zu stark zu beanspruchen. Die Anzahl der Leitungen und auch deren Querschnitt wird entsprechend an die Größe der Schutzgaskammer angepasst.

Das Schutzgas wird vor Beginn des Schweißprozesses mit einem Volumenstrom zwischen vorzugsweise 5 bis 5000 l/min in die Schutzgaskammer zugeführt. Es ist anzustreben, die Schutzgaskammer vor dem Schweißprozess mit den vorhandenen Leitungen möglichst rasch mit Schutzgas zu füllen.

Die Zuführung des Schutzgases in die Schutzgaskammer vor Beginn des Schweißprozesses kann gestoppt werden, sobald in der Schutzgaskammer ein Überdruck von vorzugsweise 1 mbar bis 3 mbar gegenüber der Umgebung erzielt wird. Durch den geringen Überdruck wird sichergestellt, dass ausreichend Schutzgas in der Schutzgaskammer enthalten ist. Eine Verschwendung des teuren Schutzgases kann dadurch verhindert werden.

Wenn die Schutzgaskammeratmosphäre nach dem Schweißprozess bzw. nach der Fertigstellung eines Werkstücks aus der Schutzgaskammer in eine Speicherkammer gepumpt wird, kann das bezüglich seiner Reinheit wiederverwendbare Schutzgas für spätere Schweißprozesse gespeichert werden und somit Schutzgas gespart werden. Zusätzlich können über die Speicherkammer allfällige Druckschwankungen in der Schutzgaskammer ausgeglichen werden. Solche Druckschwankungen können beispielsweise bei Bewegungen eines Roboters zur Manipulation des Schweißbrenners oder Werkstücks auftreten. Dies geschieht beispielsweise dann, wenn der Roboter mit einer flexiblen Schutzgaskammerhülle fix verbunden ist und seine Bewegungen somit auf die Schutzgaskammerhülle überträgt. Durch den Ausgleich oder die Minimierung der Druckschwankungen in der Schutzgaskammer wirken auch geringere Kräfte auf den Roboter. Nachdem während des Schweißprozesses die verschmutzte Schutzgaskammeratmosphäre um die Schweißstelle abgesaugt wird, ist das verbleibende Schutzgas in der Schutzgaskammer im Wesentlichen sauber und kann daher weiterverwendet werden. Durch das Abpumpen des Schutzgases aus der Schutzgaskammer entsteht ein Unterdruck, der vor der Entnahme des Werkstücks aus der Schutzgaskammer ausgeglichen werden muss. Dies erfolgt am einfachsten durch ein Fluten mit der Umgebungsluft. Nachdem das nächste Werkstück in die Schutzgaskammer eingelegt wurde bzw. bevor der nächste Schweißprozess begonnen wird, wird die Schutzgaskammeratmosphäre aus der Schutzgaskammer evakuiert bzw. abgesaugt und dann das Schutzgas in die Schweißkammer geleitet.

Gelöst wird die erfindungsgemäße Aufgabe auch durch eine oben erwähnte Vorrichtung zum Schweißen von Werkstücken in einer Schutzgaskammer, wobei eine Einrichtung zur zumindest zeitweisen Umkehrung der Richtung der Gasströmung im Gaskanal des Schweißbrenners vorgesehen ist, sodass zumindest während des Schweißprozesses über den Gaskanal Schutzgaskammeratmosphäre von der Schweißstelle abgesaugt wird. Zu den dadurch erzielbaren Vorteilen wird auf die obige Beschreibung des Verfahrens verwiesen.

Vorteilhafterweise beträgt der Querschnitt des Gaskanals zur **Ab**saugung von Schutzgaskammeratmosphäre von der Schweißstelle zwischen 3 mm² und 150 mm². Derartige Gaskanal-Querschnitte können mit Durchmessern des Gaskanals zwischen 2 mm und 14 mm erzielt werden und sorgen für eine ausreichend rasche und effiziente **Ab**saugung der Schutzgaskammeratmosphäre und der darin enthaltenen metallischen Stäube von der Schweißstelle. Die Wahl eines geeigneten Querschnitts des Gaskanals ist wiederum abhängig vom Betriebs- bzw. Differenzdruck der Schutzgaskammer.

Wenn vor der Mündung des Gaskanals eine Gasdüse mit einer verjüngend ausgebildeten Öffnung angeordnet ist, kann eine Optimierung der Strömung der abgesaugten Schutzgaskammeratmosphäre erzielt werden. Dadurch kann sichergestellt werden, dass im Bereich der Schweißstelle die Schutzgaskammeratmosphäre und darin enthaltene Stäube optimal abgesaugt werden und keine Punkte unterhalb der Gasdüse des Schweißbrenners existieren, wo verschmutztes Schutzgas ins Innere der Schutzgaskammer entweichen kann.

Gemäß einem weiteren Merkmal der Erfindung ist im Gaskanal ein Filter angeordnet. Wie bereits oben erwähnt, können dadurch die metallischen Stäube optimal gesammelt und entsorgt werden.

Wenn am Schweißbrenner, vorzugsweise an der Gasdüse des Schweißbrenners, ein Leitblech angeordnet ist, kann eine laminare Strömung der angesaugten Schutzgaskammeratmosphäre im Bereich um die Schweißstelle erzielt werden. Durch geeignete Gestaltung des Leitblechs wird ein Strömungsfeld erzeugt, welches im Wesentlichen ausschließlich in Richtung des Lichtbogens zeigt.

Weiters kann im Gaskanal eine Zuleitung für Sauerstoff angeordnet sein, um eine gezielte Oxidation der metallischen Stäube zu bewirken. Bei der Anordnung auch eines Filters im Gaskanal ist es anzustreben, dass die Sauerstoffzuführung und somit Oxidation der Stäube vor dem Filter erfolgt. Die Zuleitung für Sauerstoff wird im einfachsten Fall durch eine Zuführung von Umgebungsluft realisiert werden.

Dabei kann eine Einrichtung zur Vermischung bzw. Verwirbelung der abgesaugten Schutzgaskammeratmosphäre mit dem zugeleiteten Sauerstoff angeordnet sein, um eine optimale Oxidation der metallischen Stäube zu erzielen. Die Vermischungseinrichtung kann beispielsweise durch eine entsprechend gestaltete Engstelle oder dgl. gebildet sein.

Im Gaskanal sowie an der Gasdüse können Elemente zur Leitung der Strömung der abgesaugten Schutzgaskammeratmosphäre angeordnet werden, um eine möglichst gleichmäßige Strömung innerhalb des Gaskanals zu erzielen. Derartige Elemente können durch lamellenförmige Teile oder dgl. gebildet sein.

Im Bereich des Gaskanals ist vorzugsweise eine Kühlvorrichtung vorgesehen, um die Komponenten der Schweißvorrichtung vor unzulässig hohen Temperaturen zu schützen und Beschädigungen derselben zu verhindern. Beispielsweise ist es zweckmäßig, die abgesaugte Schutzgaskammeratmosphäre unter 70° abzukühlen, sodass Komponenten der Schweißvorrichtung nicht beschädigt werden. Die Kühlvorrichtung kann durch eine Luftkühlung und bzw. oder einer Flüssigkeitskühlung gebildet sein, welche vorzugsweise möglichst nahe an der Schweißstelle angeordnet ist, um die abgesaugte Schutzgaskammeratmosphäre möglichst rasch abzukühlen. Beispielsweise kann eine ohnedies im Schweißbrenner enthaltene Wasserkühlung mit entsprechender Anordnung von Kühlrippen zur Abführung der Verlustwärme dazu verwendet werden.

In der Schutzgaskammer kann ein Sensor zur Messung der Sauerstoffkonzentration und bzw. oder ein Partikelsensor zur Messung des Schmauchgehalts bzw. der Rauchkonzentration und bzw. oder ein Differenzdrucksensor zur Messung des Differenzdrucks zwischen der Schutzgaskammer und der Umgebung vorgesehen sein. Die gemessenen Werte der Sauerstoffkonzentration, des Schmauchgehalts und des Differenzdrucks können zur Steuerung oder Regelung des Schweißprozesses bzw. der Schutzgaskammeratmosphäre herangezogen werden. Zu diesem Zweck sind die Sensoren mit der Steuereinrichtung der Schweißstromquelle verbunden.

Gemäß einem weiteren Merkmal der Erfindung ist eine Speicherkammer über eine Pumpe und über eine Druckausgleichsleitung mit integriertem Sperrventil mit der Schutzgaskammer verbunden. Durch die Pumpe kann die Schutzgaskammeratmosphäre, bei geschlossenem Sperrventil, nach dem Schweißprozess aus der Schutzgaskammer gepumpt und für eine spätere Verwendung in der Speicherkammer gelagert werden. Bei Bedarf kann das gelagerte Schutzgas über die Druckausgleichsleitung und geöffnetem Sperrventil in die Schutzgaskammer zugeführt werden. Anstelle einer eigenen Speicherkammer kann die Schutzgaskammeratmosphäre auch in einen ohnedies vorhandenen Vorratsspeicher für das Schutzgas zurückgepumpt werden.

Die vorliegende Erfindung wird anhand der beigefügten Zeichnungen näher erläutert. Darin zeigen:
- Fig. 1: eine schematische Darstellung einer Vorrichtung zum Schweißen eines Werkstücks in einer Schutzgaskammer nach dem Stand der Technik;
- Fig. 2: eine schematische Darstellung einer Vorrichtung zum Schweißen eines Werkstücks in einer Schutzgaskammer unter Verwendung des erfindungsgemäßen Verfahrens, bei dem die Strömungsrichtung im Gaskanal umgekehrt ist;
- Fig. 3: eine bevorzugte Ausführungsform eines Schweißbrenners, der zur Durchführung des erfindungsgemäßen Schweißverfahrens geeignet ist;
- Fig. 4: eine weitere bevorzugte Ausführungsform eines Schweißbrenners, der zur Durchführung des erfindungsgemäßen Schweißverfahrens geeignet ist; und
- Fig. 5: eine Kühlvorrichtung zur Kühlung des Schweißbrenners bzw. der während des Schweißprozesses über den Gaskanal des Schweißbrenners abgesaugten Schutzgaskammeratmosphäre.

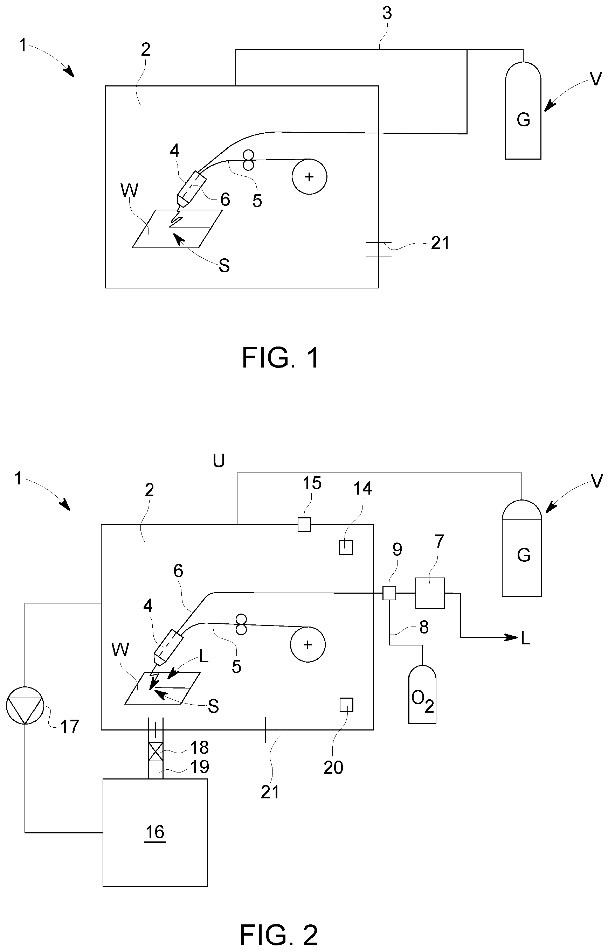

In Fig. 1 ist eine Vorrichtung 1 zum Schweißen eines Werkstücks W in einer Schutzgaskammer 2 nach dem Stand der Technik schematisch dargestellt. Über zumindest eine Leitung 3 kann Schutzgas G von einem Vorratsspeicher V in die Schutzgaskammer 2 eingeleitet werden. Zum Schweißen des Werkstücks W befindet sich ein Schweißbrenner 4 zur Durchführung eines Schweißprozesses in der Schutzgaskammer **2.** Dem Schweißbrenner 4 wird ein abschmelzbarer Schweißdraht 5 von einer Vorratstrommel zugeführt, welche auch außerhalb der Schutzgaskammer 2 angeordnet sein kann. Üblicherweise weist der Schweißbrenner 4 einen Gaskanal 6 zur Zuführung eines Schutzgases G zur Schweißstelle S auf. Der Schweißprozess findet in der mit Schutzgas G gefluteten Schutzgaskammer 2 statt, sodass kein Sauerstoff an die Schweißstelle S gelangen und dort zu unerwünschter Oxidation führen kann. Über zumindest einen Auslass 21 kann die Schutzgaskammeratmosphäre L aus der Schutzgaskammer 2 ausgelassen bzw. gepumpt werden. Über diesen Auslass 21 wird auch vorhandene Luft aus der Schutzgaskammer 2 während des Befüllens der Schutzgaskammer 2 mit Schutzgas G abgeführt oder hinausgedrückt.

Fig. 2 zeigt eine schematische Darstellung einer Vorrichtung 1 zum Schweißen eines Werkstücks W in einer Schutzgaskammer 2 unter Verwendung des erfindungsgemäßen Verfahrens, bei dem die Strömungsrichtung im Gaskanal 6 zumindest zeitweise umgekehrt werden kann. Zumindest während des Schweißprozesses wird dadurch über den Gaskanal 6 des Schweißbrenners 4 zumindest zeitweise Schutzgaskammeratmosphäre L von der Schweißstelle S abgesaugt. In dieser abgesaugten Schutzgaskammeratmosphäre L sind metallische Stäube, der sogenannte Schmauch, enthalten und können somit die Schweißstelle S und das Innere der Schweißkammer 2 nicht verunreinigen. Dadurch, dass der Schweißprozess in einer Schutzgasatmosphäre innerhalb der Schweißkammer 2 stattfindet, braucht kein Schutzgas G zusätzlich über den Schweißbrenner 4 an die Schweißstelle S herangeführt werden, sodass der Gaskanal 6 im Schweißbrenner 4 für die Absaugung der Schutzgaskammeratmosphäre L verwendet werden kann. Es können somit handelsübliche Schweißbrenner 4 für den Schweißprozess verwendet werden und es sind keine komplexen Konstruktionen des Schweißbrenners 4 mit gesonderten Absaugkanälen notwendig. Es braucht lediglich die Strömungsrichtung im Gaskanal 6 des Schweißbrenners 4 zumindest während des Schweißprozesses zumindest zeitweise umgekehrt werden, sodass die Schutzgaskammeratmosphäre L gezielt von der Schweißstelle S abgesaugt wird. Im Gaskanal 6 kann ein Filter 7 zum Filtern der metallischen Stäube aus der abgesaugten Schutzgaskammeratmosphäre angeordnet werden. Zusätzlich kann im Gaskanal 6 eine Einrichtung 9 zur Vermischung oder Verwirbelung der abgesaugten Schutzgaskammeratmosphäre L mit Sauerstoff O₂ angeordnet sein, um die metallischen Stäube in der abgesaugten Schutzgaskammeratmosphäre gezielt zu oxidieren und somit eine allfällige Brand- oder Explosionsgefahr zu reduzieren. Die Einrichtung 9 ist vorzugsweise vor dem Filter 7 angeordnet.

Die Schutzgaskammer 2 kann auch über den Gaskanal 6 des Schweißbrenners 4 vor der Durchführung des Schweißprozesses evakuiert werden, obgleich dazu natürlich auch andere Leitungen oder Pumpen verwendet werden können (nicht dargestellt).

In der Schutzgaskammer 2 können Sensoren 14 zur Messung der Sauerstoffkonzentration c(O₂), Partikelsensoren 20 zur Messung des Schmauchgehalts bzw. der Rauchkonzentration c(R) oder Differenzdrucksensoren 15 zur Messung des Differenzdrucks Δp zwischen der Schutzgaskammer 2 und der Umgebung U angeordnet sein. Die Sensoren 14 zur Messung der Sauerstoffkonzentration c(O₂), Partikelsensoren 20 zur Messung des Schmauchgehalts c(R) und Differenzdrucksensoren 15 zur Messung des Differenzdrucks Δp zwischen der Schutzgaskammer 2 und der Umgebung U sind vorzugsweise mit einer Steuereinrichtung der Schweißstromquelle (nicht dargestellt) verbunden, wodurch der Schweißprozess in Abhängigkeit der gemessenen Sauerstoffkonzentration c(O₂) und bzw. oder des gemessenen Schmauchgehalts c(R) und bzw. oder gemessenen Differenzdrucks Δp gesteuert oder geregelt werden kann. Beispielsweise kann der Schweißprozess erst begonnen werden, sobald die Sauerstoffkonzentration c(O₂) in der Schutzgaskammer 2 einen vorgegebenen Sauerstoffkonzentrationsgrenzwert c(O₂)_{G}, vorzugsweise 100 ppm, unterschreitet und bzw. oder der Differenzdruck Δp einen vorgegebenen Differenzdruckgrenzwert Δp_{G}, vorzugsweise 1 bis 3 mbar, überschreitet.

Über zumindest einen Auslass 21 kann wiederum die Schutzgaskammeratmosphäre L aus der Schutzgaskammer 2 ausgelassen bzw. gepumpt oder vorhandene Luft aus der Schutzgaskammer 2 während des Befüllens der Schutzgaskammer 2 mit Schutzgas G abgeführt werden.

Zusätzlich kann eine Speicherkammer 16 über eine Pumpe 17 mit der Schutzgaskammer 2 verbunden sein, sodass die Schutzgaskammeratmosphäre L nach dem Schweißprozess aus der Schutzgaskammer 2 in die Speicherkammer 16 gepumpt werden kann und daraus Schutzgas G extrahiert und für spätere Schweißprozesse gespeichert werden kann. Über die Speicherkammer 16 werden auch allfällige Druckschwankungen in der Schutzgaskammer 2 über eine Druckausgleichsleitung 19 mit Sperrventil 18 reduziert, welche beispielsweise bei Bewegungen eines Roboters (nicht dargestellt) zur Manipulation des Schweißbrenners 4 oder Werkstücks W auftreten. Durch den Ausgleich oder die Minimierung der Druckschwankungen in der Schutzgaskammer 2 wirken geringere Kräfte auf den Roboter, Anschlüsse, Folien, Dichtungen, etc.

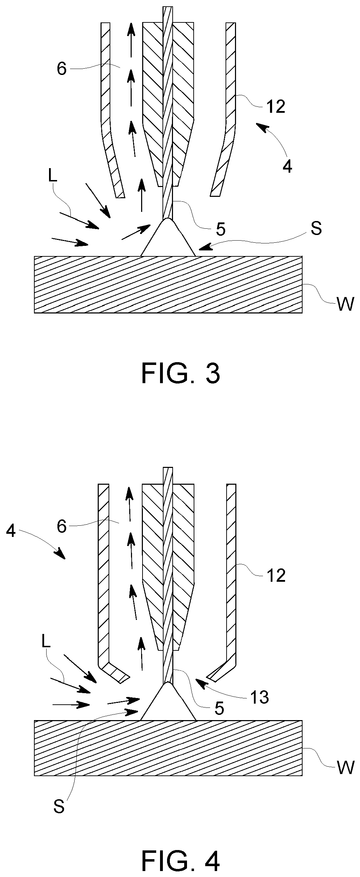

Fig. 3 zeigt eine bevorzugte Ausführungsform eines Schweißbrenners 4, der zur Durchführung des erfindungsgemäßen Schweißverfahrens geeignet ist. Dementsprechend wird die Strömung im Gaskanal 6, der normalerweise zur Zuführung von Schutzgas G zur Schweißstelle S dient, zumindest zeitweise umgekehrt, sodass Schutzgaskammeratmosphäre L von der Schweißstelle S abgesaugt werden kann. Sichtbar ist auch der zugeführte Schweißdraht 5 aus abschmelzbarem Material und die Gasdüse 12 des Schweißbrenners 4.

In Fig. 4 ist eine weitere bevorzugte Ausführungsform eines Schweißbrenners 4, der zur Durchführung des erfindungsgemäßen Schweißverfahrens geeignet ist, dargestellt. Wenn die Öffnung 13 der Gasdüse 12 entsprechend verjüngend ausgebildet ist, kann eine Optimierung der Strömung, beispielsweise eine laminare Strömung, der abgesaugten Schutzgaskammeratmosphäre L im Bereich um die Schweißstelle S erzielt werden. Dadurch kann sichergestellt werden, dass im Bereich der Schweißstelle S die Schutzgaskammeratmosphäre L und darin enthaltene Stäube optimal abgesaugt werden und keine Punkte unterhalb der Gasdüse 12 des Schweißbrenners 4 existieren, wo verschmutztes Schutzgas G ins Innere der Schutzgaskammer 2 entweichen kann.

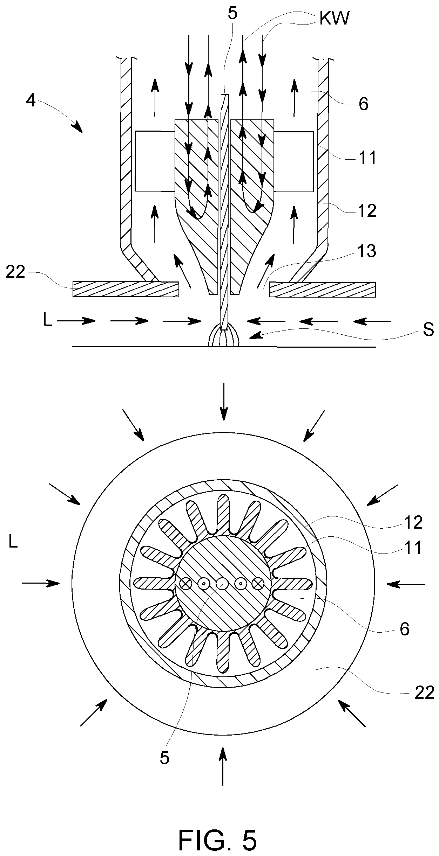

Schließlich zeigt Fig. 5 eine Kühlvorrichtung 11 zur Kühlung des Schweißbrenners 4 bzw. der während des Schweißprozesses über den Gaskanal 6 des Schweißbrenners S abgesaugten Schutzgaskammeratmosphäre L. In der Fig. 5 ist eine Kühlvorrichtung 11 mit Kühlrippen dargestellt, welche indirekt über Kühlwasser KW, eine Kühlflüssigkeit oder auch ein Kühlgas gekühlt wird. Ferner ist ein Leitblech 22 eingezeichnet, welches für eine laminare Strömung der angesaugten Schutzgaskammeratmosphäre L im Bereich um die Schweißstelle S sorgt.

## Patentansprüche

1. Verfahren zum Schweißen von Werkstücken (W) in einer Schutzgaskammer (2), wobei die Schutzgaskammer (2) vor Beginn des Schweißprozesses über entsprechende Leitungen (3) mit Schutzgas (G) gefüllt wird, und das Werkstück (W) mit einem Schweißbrenner (4) mit einem Gaskanal (6) zur Zuführung eines Schutzgases (G) und einem zur Schweißstelle (S) zuführbaren abschmelzbaren Schweißdraht (5) geschweißt wird, **dadurch gekennzeichnet, dass** zumindest während des Schweißprozesses zumindest zeitweise die Strömungsrichtung im Gaskanal (6) für das Schutzgas (G) im Schweißbrenner (4) umgekehrt wird, sodass Schutzgaskammeratmosphäre (L) von der Schweißstelle (S) abgesaugt wird.

2. Schweißverfahren nach Anspruch 1, **dadurch gekennzeichnet, dass** vor Beginn des Schweißprozesses bevor die Schutzgaskammer (2) mit Schutzgas (G) gefüllt wird, die Schutzgaskammer (2) über den Schweißbrenner (4) durch Absaugen von Schutzgaskammeratmosphäre (L) über den Gaskanal (6) evakuiert wird.

3. Schweißverfahren nach Anspruch 1 oder 2, **dadurch gekennzeichnet, dass** die während des Schweißprozesses über den Gaskanal (6) des Schweißbrenners (4) abgesaugte Schutzgaskammeratmosphäre (L) gefiltert wird.

4. Schweißverfahren nach einem der Ansprüche 1 bis 3, **dadurch gekennzeichnet, dass** die während des Schweißprozesses über den Gaskanal (6) des Schweißbrenners (4) abgesaugte Schutzgaskammeratmosphäre (L) gekühlt wird.

5. Schweißverfahren nach einem der Ansprüche 1 bis 4, **dadurch gekennzeichnet, dass** der während des Schweißprozesses über den Gaskanal (6) des Schweißbrenners (4) abgesaugten Schutzgaskammeratmosphäre (L) Sauerstoff (O₂) zugeführt wird.

6. Schweißverfahren nach einem der Ansprüche 1 bis 5, **dadurch gekennzeichnet, dass** die Sauerstoffkonzentration (c(O₂)) und bzw. oder der Schmauchgehalt (c(R)) in der Schutzgaskammer (2) und bzw. oder der Differenzdruck (Δp) zwischen der Schutzgaskammer (2) und der Umgebung (U) gemessen wird.

7. Schweißverfahren nach Anspruch 6, **dadurch gekennzeichnet, dass** der Schweißprozess begonnen wird, sobald die Sauerstoffkonzentration (c(O₂)) in der Schutzgaskammer (2) einen vorgegebenen Sauerstoffgrenzwert (c(O₂)_{G}), vorzugsweise 100 ppm, unterschreitet und bzw. oder der Schmauchgehalt (c(R)) einen vorgegebenen Schmauchgehaltgrenzwert (c(R)_{G}) und bzw. oder der Differenzdruck (Δp) einen vorgegebenen Differenzdruckgrenzwert (Δp_{G}), vorzugsweise 3 mbar, überschreitet.

8. Schweißverfahren nach Anspruch 6 oder 7, **dadurch gekennzeichnet, dass** die Menge des in die Schutzgaskammer (2) über die Leitungen (3) zugeführte Schutzgases (G) in Abhängigkeit der gemessenen Sauerstoffkonzentration (c(O₂)) und bzw. oder des gemessenen Schmauchgehalts (c(R)) und bzw. oder des gemessenen Differenzdrucks (Δp) geregelt wird.

9. Schweißverfahren nach einem der Ansprüche 1 bis 8, **dadurch gekennzeichnet, dass** nach dem Schweißprozess die Schutzgaskammeratmosphäre (G) aus der Schutzgaskammer (2) in eine Speicherkammer (16) gepumpt wird.

10. Vorrichtung (1) zum Schweißen von Werkstücken (W) in einer Schutzgaskammer (2), mit einer Schutzgaskammer (2) mit Leitungen (3) zum Einströmen eines Schutzgases (G), einem Schweißbrenner (4) zur Durchführung eines Schweißprozesses unter Zuführung eines abschmelzbaren Schweißdrahts (5), wobei der Schweißbrenner (4) einen Gaskanal (6) zur Zuführung eines Schutzgases (G) aufweist, **dadurch gekennzeichnet, dass** eine Einrichtung zur zumindest zeitweisen Umkehrung der Richtung der Gasströmung im Gaskanal (6) des Schweißbrenners (4) vorgesehen ist, sodass zumindest während des Schweißprozesses über den Gaskanal (6) Schutzgaskammeratmosphäre (L) von der Schweißstelle (S) abgesaugt wird.

11. Schweißvorrichtung (1) nach Anspruch 10, **dadurch gekennzeichnet, dass** der Querschnitt (A) des Gaskanals (6) zur Absaugung von Schutzgaskammeratmosphäre (L) von der Schweißstelle (S) zwischen 3 mm² und 150 mm² beträgt und vor der Mündung des Gaskanals (6) vorzugsweise eine Gasdüse (12) mit einer verjüngend ausgebildeten Öffnung (13) angeordnet ist.

12. Schweißvorrichtung (1) nach Anspruch 10 oder 11, **dadurch gekennzeichnet, dass** am Schweißbrenner (4) ein Leitblech (22) angeordnet ist.

13. Schweißvorrichtung (1) nach einem der Ansprüche 10 bis 12, **dadurch gekennzeichnet, dass** im Gaskanal (6) eine Zuleitung (8) für Sauerstoff (O₂) angeordnet ist.

14. Schweißvorrichtung (1) nach einem der Ansprüche 10 bis 13, **dadurch gekennzeichnet, dass** im Bereich des Gaskanals (6) eine Kühlvorrichtung (11) vorgesehen ist.

15. Schweißvorrichtung (1) nach einem der Ansprüche 10 bis 14, **dadurch gekennzeichnet, dass** eine Speicherkammer (16) über eine Pumpe (17) und über eine Druckausgleichsleitung (19) mit integriertem Sperrventil (18) mit der Schutzgaskammer (2) verbunden ist.

## Claims

1. A method for welding workpieces (W) in a protective gas chamber (2), wherein the protective gas chamber (2) is filled with protective gas (G) via corresponding lines (3) before the start of the welding process, and the workpiece (W) is welded using a welding torch (4) comprising a gas channel (6) for supplying a protective gas (G) and a meltable welding wire (5) that can be supplied to the welding location (S), **characterized in that**, at least during the welding process, the flow direction in the gas channel (6) for the protective gas (G) in the welding torch (4) is reversed at least temporarily, so that the protective gas chamber atmosphere (L) is suctioned from the welding location (S).

2. The welding method according to claim 1, **characterized in that** before the start of the welding process, before the protective gas chamber (2) is filled with protective gas (G), the protective gas chamber (2) is evacuated via the welding torch (4) by suctioning protective gas chamber atmosphere (L) via the gas channel (6).

3. The welding method according to claim 1 or 2, **characterized in that** the protective gas chamber atmosphere (L) suctioned during the welding process via the gas channel (6) of the welding torch (4) is filtered.

4. The welding method according to any one of claims 1 to 3, **characterized in that** the protective gas chamber atmosphere (L) suctioned during the welding process via the gas channel (6) of the welding torch (4) is cooled.

5. The welding method according to any one of claims 1 to 4, **characterized in that** oxygen (O₂) is supplied to the protective gas chamber atmosphere (L) suctioned during the welding process via the gas channel (6) of the welding torch (4).

6. The welding method according to any one of claims 1 to 5, **characterized in that** the oxygen concentration (c(O₂)) and/or the fume content (c(R)) in the protective gas chamber (2) and/or the differential pressure (Δp) between the protective gas chamber (2) and the environment (U) is measured.

7. The welding method according to claim 6, **characterized in that** the welding process is started as soon as the oxygen concentration (c(O₂)) in the protective gas chamber (2) falls below a predetermined oxygen threshold value (c(O₂)_{G}), preferably 100 ppm, and/or the fume content (c(R)) exceeds a predetermined fume content threshold value (c(R)_{G}) and/or the differential pressure (Δp) exceeds a predetermined differential pressure threshold value (Δp_{G}), preferably 3 mbar.

8. The welding method according to claim 6 or 7, **characterized in that** the amount of the protective gas (G) supplied to the protective gas chamber (2) via the lines (3) is controlled as a function of the measured oxygen concentration (c(O₂)) and/or the measured fume content (c(R)) and/or the measured differential pressure (Δp).

9. The welding method according to any one of claims 1 to 8, **characterized in that**, after the welding process, the protective gas chamber atmosphere (G) is pumped out of the protective gas chamber (2) into a storage chamber (16).

10. A device (1) for welding workpieces (W) in a protective gas chamber (2), comprising a protective gas chamber (2) with lines (3) for the inflow of a protective gas (G) and comprising a welding torch (4) for carrying out a welding process while supplying a meltable welding wire (5), wherein the welding torch (4) has a gas channel (6) for supplying a protective gas (G), **characterized in that** a device for at least temporarily reversing the direction of the gas flow in the gas channel (6) of the welding torch (4) is provided, so that protective gas chamber atmosphere (L) is suctioned from the welding location (S) via the gas channel (6) at least during the welding process.

11. The welding device (1) according to claim 10, **characterized in that** the cross section (A) of the gas channel (6) for suctioning the protective gas chamber atmosphere (L) from the welding location (S) is between 3 mm² and 150 mm², and a gas nozzle (12) having a tapered opening (13) is preferably arranged in front of the mouth of the gas channel (6).

12. The welding device (1) according to claim 10 or 11, **characterized in that** a baffle plate (22) is arranged on the welding torch (4).

13. The welding device (1) according to any one of claims 10 to 12, **characterized in that** a feed line (8) for oxygen (O₂) is arranged in the gas channel (6).

14. The welding device (1) according to any one of claims 10 to 13, **characterized in that** a cooling device (11) is provided in the region of the gas channel (6).

15. The welding device (1) according to one of claims 10 to 14, **characterized in that** a storage chamber (16) is connected to the protective gas chamber (2) via a pump (17) and via a pressure equalization line (19) with an integrated stop valve (18).

## Revendications

1. Procédé de soudage de pièces à usiner (W) dans une chambre de gaz protecteur (2), dans lequel la chambre de gaz protecteur (2) est remplie de gaz protecteur (G) avant le démarrage du processus de soudage par des conduites correspondantes (3), et la pièce à usiner (W) est soudée avec une torche de soudage (4) comportant un canal de gaz (6) pour l'alimentation d'un gaz protecteur (G) et un fil de soudure fusible (5) pouvant être amené au point de soudure (S), **caractérisé en ce que**, au moins pendant le processus de soudage, au moins temporairement, la direction d'écoulement dans le canal de gaz (6) pour le gaz protecteur (G) dans la torche de soudage (4) est inversée, de sorte que l'atmosphère de la chambre de gaz protecteur (L) est aspirée depuis le point de soudure (S).

2. Procédé de soudage selon la revendication 1, **caractérisé en ce que**, avant le démarrage du processus de soudage, avant que la chambre de gaz protecteur (2) ne soit remplie de gaz protecteur (G), la chambre de gaz protecteur (2) est évacuée par la torche de soudage (4) en aspirant l'atmosphère de la chambre de gaz protecteur (L) par le canal de gaz (6).

3. Procédé de soudage selon la revendication 1 ou 2, **caractérisé en ce que** l'atmosphère de la chambre de gaz protecteur (L) aspirée pendant le processus de soudage par le canal de gaz (6) de la torche de soudage (4) est filtrée.

4. Procédé de soudage selon l'une des revendications 1 à 3, **caractérisé en ce que** l'atmosphère de la chambre de gaz protecteur (L) aspirée pendant le processus de soudage par le canal de gaz (6) de la torche de soudage (4) est refroidie.

5. Procédé de soudage selon l'une des revendications 1 à 4, **caractérisé en ce que** de l'oxygène (O₂) est ajouté à l'atmosphère de la chambre de gaz protecteur (L) aspirée pendant le processus de soudage par le canal de gaz (6) de la torche de soudage (4).

6. Procédé de soudage selon l'une des revendications 1 à 5, **caractérisé en ce que** la concentration d'oxygène (c(O₂)) et/ou la teneur en résidus de combustion (c(R)) dans la chambre de gaz protecteur (2) et/ou la pression différentielle (Δp) entre la chambre de gaz protecteur (2) et l'environnement (U) est mesurée.

7. Procédé de soudage selon la revendication 6, **caractérisé en ce que** le processus de soudage est commencé dès que la concentration d'oxygène (c(O₂)) dans la chambre de gaz protecteur (2) descend en dessous d'une valeur limite d'oxygène prédéfinie (c(O₂)^{g}), de préférence 100 ppm, et/ou que la teneur en résidus de combustion (c(R)) dépasse une valeur limite de teneur en fumées prédéfinie (c(R)^{g}) et/ou que la pression différentielle (Δp) dépasse une valeur limite de pression différentielle prédéfinie (Δp^{g}), de préférence 3 mbar.

8. Procédé de soudage selon la revendication 6 ou 7, **caractérisé en ce que** la quantité de gaz protecteur (G) introduite dans la chambre de gaz protecteur (2) par les conduites (3) est régulée en fonction de la concentration d'oxygène mesurée (c(O₂)) et/ou de la teneur en résidus de combustion mesurée (c(R)) et/ou de la pression différentielle mesurée (Δp).

9. Procédé de soudage selon l'une des revendications 1 à 8, **caractérisé en ce qu'**après le processus de soudage, l'atmosphère de la chambre de gaz protecteur (G) est extraite de la chambre de gaz protecteur (2) dans une chambre de stockage (16).

10. Dispositif (1) pour le soudage de pièces à usiner (W) dans une chambre de gaz protecteur (2), comprenant une chambre de gaz protecteur (2) avec des conduites (3) pour l'entrée d'un gaz protecteur (G), une torche de soudage (4) pour réaliser un processus de soudage avec l'apport d'un fil de soudure fusible (5), la torche de soudage (4) comportant un canal de gaz (6) pour l'alimentation d'un gaz protecteur (G), **caractérisé en ce qu'**un dispositif est prévu pour l'inversion au moins temporaire de la direction de l'écoulement de gaz dans le canal de gaz (6) de la torche de soudage (4), de sorte qu'au moins pendant le processus de soudage, l'atmosphère de la chambre de gaz protecteur (L) est aspirée du point de soudure (S) par le canal de gaz (6).

11. Dispositif de soudage (1) selon la revendication 10, **caractérisé en ce que** la section transversale (A) du canal de gaz (6) pour l'aspiration de l'atmosphère de la chambre de gaz protecteur (L) du point de soudure (S) est comprise entre 3 mm² et 150 mm² et, de préférence, une buse de gaz (12) avec une ouverture (13) réalisée en forme de cône rétrécissant est disposée avant l'embouchure du canal de gaz (6).

12. Dispositif de soudage (1) selon la revendication 10 ou 11, **caractérisé en ce qu'**une tôle de guidage (22) est disposée sur la torche de soudage (4).

13. Dispositif de soudage (1) selon l'une des revendications 10 à 12, **caractérisé en ce qu'**une conduite d'alimentation (8) pour l'oxygène (O₂) est disposée dans le canal de gaz (6).

14. Dispositif de soudage (1) selon l'une des revendications 10 à 13, **caractérisé en ce qu'**un dispositif de refroidissement (11) est prévu dans la zone du canal de gaz (6).

15. Dispositif de soudage (1) selon l'une des revendications 10 à 14, **caractérisé en ce qu'**une chambre de stockage (16) est reliée à la chambre de gaz protecteur (2) par une pompe (17) et par une conduite de compensation de pression (19) munie d'un clapet d'arrêt intégrée (18).
